(19) Europäisches Patentamt
European Patent Office
Office européen des brevets

(11) EP 3 530 687 A1

(12) **EUROPEAN PATENT APPLICATION**
published in accordance with Art. 153(4) EPC

(43) Date of publication:
**28.08.2019 Bulletin 2019/35**

(21) Application number: **17862376.5**

(22) Date of filing: **20.10.2017**

(51) Int Cl.:
***C08J 3/22*** *(2006.01)* ***C08K 3/36*** *(2006.01)*
***C08K 5/37*** *(2006.01)* ***C08L 7/00*** *(2006.01)*
***C08L 21/00*** *(2006.01)*

(86) International application number:
**PCT/JP2017/037942**

(87) International publication number:
**WO 2018/074571 (26.04.2018 Gazette 2018/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.10.2016 JP 2016207392**

(71) Applicant: **Sumitomo Seika Chemicals Co., Ltd.**
**Kako-gun, Hyogo 675-0145 (JP)**

(72) Inventors:
- **MURAKAMI, Shinya**
**Kako-gun**
**Hyogo 675-0145 (JP)**
- **KAWASAKI, Kaede**
**Kako-gun**
**Hyogo 675-0145 (JP)**

(74) Representative: **Mewburn Ellis LLP**
**City Tower**
**40 Basinghall Street**
**London EC2V 5DE (GB)**

(54) **MASTERBATCH**

(57) Kneading workability and mechanical property of a rubber product are improved by a masterbatch comprising a sulfide compound (A) and silica (B),
wherein the sulfide compound (A) is a chain or cyclic compound consisting essentially of repeating units represented by formula (I) :

[Chemical formula 1]

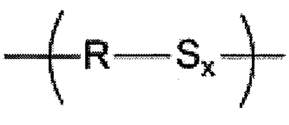 (I)

[In the formula (I), R represents a linear, branched or cyclic alkylene group having 1 to 12 carbon atoms; a linear, branched or cyclic (poly)oxyalkylene group having 1 to 12 carbon atoms; or a linear, branched or cyclic (poly)thioalkylene group having 1 to 12 carbon atoms (wherein the alkylene group, the (poly)oxyalkylene group and the (poly)thioalkylene group are unsubstituted or have 1 or more optional substituents), and x represents an integer from 1 to 8.]
wherein the number of the repeating units n is 1 to 400 and each of n repeating units is the same or different from each other,
and wherein the silica (B) satisfies following conditions that:
BET specific surface area is 0.1 to 200 $m^2/g$ and
DBP oil absorption is 50 to 300 ml/100g.

EP 3 530 687 A1

## Description

TECHNICAL FIELD

The present invention relates to a masterbatch for a rubber composition, a rubber composition comprising the masterbatch and a method for producing them.

BACKGROUND ART

Use of rubber compounding agents such as sulfur in order to improve properties of rubber products is known. In recent years, industrial rubber having further improved various mechanical properties such as heat resistance and durability in rubber products is desired. In order to improve these mechanical properties, a polymer rubber compounding agent, for example, rubber compounding agent containing cyclic polysulfide, is disclosed (Patent Document 1).

Prior Art Document

Patent literatures

Patent Document 1: JP2014-210870A

SUMMARY OF THE INVENTION

Problem to be solved by the invention

However, some of rubber compounding agents are a highly viscous oil compound rather than solid. Since particularly sulfide rubber compounding agents are an oil compound, an addition of the agent as oil form causes a slip phenomenon when kneading with a rubber component with a roll in a production of rubber and thereby workability worsens. Furthermore, such an addition makes it difficult to knead uniformly.

Furthermore, especially, the sulfide rubber compounding agents have strong odor and the odor leaks when kneading with rubber components with an open-type roll generally used in a production of rubber, thereby there may be disadvantageous in an industrial production.

Means to Solve the Problems

As a result of intensive studies on combinations of sulfide rubber compounding agents and other raw materials, the present inventors have found that the above problems can be solved by using a masterbatch comprising a specific sulfide compound and a specific silica.

That is, the present invention provides a masterbatch comprising a sulfide compound (A) and silica (B), wherein the sulfide compound (A) is a chain or cyclic compound consisting essentially of repeating units represented by formula (I) :

[Chemical formula 1]

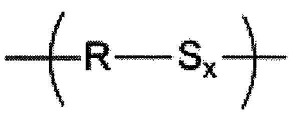 (I)

[In the formula (I), R represents a linear, branched or cyclic alkylene group having 1 to 12 carbon atoms; a linear, branched or cyclic (poly)oxyalkylene group having 1 to 12 carbon atoms; or a linear, branched or cyclic (poly)thioalkylene group having 1 to 12 carbon atoms (wherein the alkylene group, the (poly)oxyalkylene group and the (poly)thioalkylene group are unsubstituted or have 1 or more optional substituents), and x represents an integer from 1 to 8.]
wherein the number of the repeating units n is 1 to 400 and each of n repeating units is the same or different from each other and wherein the silica (B) satisfies following conditions that:

BET specific surface area is 0.1 to 200 $m^2/g$ and
DBP oil absorption is 50 to 300 ml/100g,

and a method for producing them.

The present invention also provides a rubber composition comprising the masterbatch and the rubber component, and a method for producing them.

Effect of the Invention

The rubber compounding agent is efficiently and uniformly mixed in the rubber composition by using the masterbatch of the peresent invention. In addition, the rubber composition to which the masterbatch of the present invention is added can impart good mechanical properties to a resulting rubber product.

MODE FOR CARRYING OUT THE INVENTION

<Masterbatch>

The masterbatch in the present invention comprises at least a sulfide compound and silica. In particular, the masterbatch of the present invention comprises both the sulfide compound (A) and the silica (B).

In the method for producing the rubber composition, slip phenomenon hardly occurs during kneading with a roll by using the masterbatch of the present invention. Further, the masterbatch of the present invention is excellent in dispersibility in a rubber composition. Further, when the masterbatch of the present invention is used in the method for producing the rubber composition, it can impart good mechanical properties (for example, heat resistance, durability, mechanical property, vibration damping property, and formability) to the rubber product.

By using the masterbatch of the present invention, the better above-described effects can be obtained than using the sulfide compound (A) and the silica (B) added separately.

[Sulfide Compound]

A sulfide compound in the present invention is a sulfide compound (A) which is a chain or cyclic compound consisting essentially of repeating units represented by formula (I):

[Chemical formula 2]

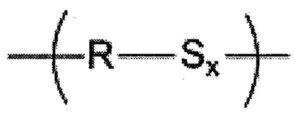 (I)

[In the formula (I), R represents a linear, branched or cyclic alkylene group having 1 to 12 carbon atoms; a linear, branched or cyclic (poly)oxyalkylene group having 1 to 12 carbon atoms; or a linear, branched or cyclic (poly)thioalkylene group having 1 to 12 carbon atoms (wherein the alkylene group, the (poly)oxyalkylene group and the (poly)thioalkylene group are unsubstituted or have 1 or more optional substituents), and x represents an integer from 1 to 8.]
wherein the number of the repeating units n is 1 to 400 and each of n repeating units is the same or different from each other. When the sulfide compound (A) is a chain sulfide compound, the terminal of the sulfide compound may be a hydrogen atom or a chlorine atom and especially the R side terminal may be a -SCl group.

The sulfide compound consisting essentially of the repeating units in the formula (I) may means a sulfide compound where the moiety of the repeating units in the formula (I) is for example, 85% by mass or more, preferably 95% by mass or more. The sulfide compound (A) may consist only of repeating units in the formula (I) .

The number of the repeating units n in the sulfide compound (A) is 1 to 400, preferably 2 to 400, more preferably 10 to 400, further preferably 30 to 250.

In the formula (I), x is an integer from 1 to 8, preferably an integer from 2 to 7, more preferably an integer from 2 to 6. Each of n pieces of x in n repeating units may be the same or different from each other.

When 100 mol% is the total of repeating units having x being 2, 3 or 4 in the sulfide compound(A), the repeating units having x being 2 may be 1 to 40 mol%, preferably 1 to 20 mol%, more preferably 1 to 10 mol%.

When 100 mol% is the total of repeating units having x being 2, 3 or 4 in the sulfide compound(A), the repeating units having x being 3 may be 45 mol% or more, preferably 55 mol% or more, more preferably 65 mol% or more. The upper limit of the repeating unit having x being 3 is preferably 100 mol% or less, more preferably 98 mol% or less, further preferably 95 mol% or less.

When 100 mol% is the total of repeating units having x being 2, 3 or 4 in the sulfide compound(A), the repeating units having x being 4 may be 1 to 50 mol%, preferably 5 to 40 mol%, more preferably 10 to 35 mol%.

From the viewpoint of improving the mechanical properties of the obtained rubber product, at least one of the repeating units having x being 2, x is 3 or x is 4 may be in above the component ratio, and the repeating units having x

being 3 is preferably in the above component ratio.

When 100 mol% is the total of repeating units having x being 2, 3 or 4 in the sulfide compound(A), the total of the repeating units having x being 1, 5, 6, 7 or 8(especially, x is 5, 6, 7 or 8) is preferably 10 mol% or less, more preferably 7 mol% or less.

When the component ratio of each repeating units in the sulfide compound (A) is within the above range, it is possible to obtain a rubber product having at least one of improved heat resistance, aging resistance, and reversion resistance. The component ratio of each repeating unit in the sulfide compound (A) can be determined by $^1$H-NMR.

R in the formula (I) is a linear, branched or cyclic alkylene group having 1 to 12 carbon atoms; a linear, branched or cyclic (poly) oxyalkylene group having 1 to 12 carbon atoms ; or a linear, branched or cyclic (poly) thioalkylene group having 1 to 12 carbon atoms. From the viewpoint of the mechanical properties of resulting rubber product, a linear or branched chain having 1 to 12 carbon atoms or a linear, branched or cyclic (poly)oxyalkylene group having 1 to 12 carbon atoms, more preferably a linear, branched or cyclic alkylene group having 1 to 12 carbon atoms (poly)oxyalkylene group, and each of n pieces of R in n repeating units may be the same or different from each other.

The number of carbon atoms in the linear, branched or cyclic alkylene group represented by R in the formula (I) is from 1 to 12. From the viewpoint of imparting excellent mechanical properties to the rubber product, the number of carbon atoms is preferably 2 to 8, more preferably 3 to 6. From the viewpoint of thermal stability, the linear or branched alkylene group is preferable.

Examples of an arbitrary substituent in the linear, branched or cyclic alkylene group in the formula (I) include an alkoxy group having 1 to 6 carbon atoms, a hydroxyl group, a carboxyl group, a halogen atom, an amino group, a mercapto group, a cyano group, a nitro group, an oxo group , a phenyl group and the like.

The linear, branched or cyclic (poly)oxyalkylene group of R in the formula (I) has 1 to 12 carbon atoms. From the viewpoint of imparting better mechanical properties to the rubber product, the number of carbon atoms preferably 2 to 6. From the viewpoint of thermal stability, a linear or branched (poly)oxyalkylene group is preferable, and both ends of the (poly)oxyalkylene group are preferably carbon atoms. In the present specification, the "(poly) oxyalkylene group" includes both of one oxyalkylene (so-called oxyalkylene) and a group having one or more kinds oxyalkylene being multiply linked (so-called polyoxyalkylene).

The linear, branched or cyclic (poly)oxyalkylene group is preferably $-C_lH_{2l}-(OC_lH_{2l})_m-$. In the formula, $C_lH_{2l}$ can be straight chain or branched chain. In the formula, l is an integer of 1 to 5 independently for each $C_lH_{2l}$ unit. That is, each $C_lH_{2l}$ in the (poly) oxyalkylene group may be the same or different in the (poly)oxyalkylene group. For example, the (poly)oxyalkylene group may be $-CH_2CH_2-(OCH_2)-(OCH_2CH_2)-$. 1 is preferably an integer from 2 to 4. m is preferably an integer from 1 to 4.

Specific examples of the linear or branched (poly)oxyalkylene group of R in the formula (I) are as follows:

- $CH_2-CH_2-O-CH_2-CH_2-O-CH_2-CH_2-O-CH_2-CH_2-O-CH_2-CH_2-O-CH_2-CH_2-$
- $CH_2-CH_2-CH_2-O-CH_2-CH_2-O-CH_2-CH_2-O-CH_2-CH_2-CH_2-$
- $CH_2-CH_2-CH_2-O-CH_2-CH_2-O-CH_2-CH_2-CH_2-O-CH_2-CH_2-$
- $CH(CH_3)-CH_2-O-CH_2-CH_2-O-CH_2-CH_2-CH_2-O-CH(CH_3)-$
- $CH(CH_2CH_3)-CH_2-O-CH_2-CH_2-O-CH_2-CH_2-CH_2-O-CH(CH_2CH_3)-$
- $CH_2-CH_2-O-CH_2-CH_2-O-CH_2-CH_2-$
- $CH_2-CH_2-CH_2-O-CH_2-CH_2-$
- $CH_2-CH_2-O-CH_2-CH_2-CH_2-$
- $CH_2-CH(CH_3)-O-CH_2-CH(CH_3)-$
- $CH(CH_3)-CH_2-O-CH(CH_3)-CH_2-$
- $CH_2-CH_2-O-CH_2-CH_2-$.

Examples of the optional substituent in the linear, branched or cyclic (poly)oxyalkylene group of R in the formula (I) include an alkoxy group having 1 to 6 carbon atoms, a hydroxyl group, a carboxyl group, a halogen atom, an amino group, a mercapto group, a cyano group, a nitro group, an oxo group, a phenyl group and the like.

The linear, branched or cyclic (poly)thioalkylene group in the formula(I) has 1 to 12 carbon atoms. From the viewpoint of imparting better mechanical properties to the rubber product, the number of carbons is preferably 2 to 6. From the viewpoint of thermal stability, the linear or branched (poly)thioalkylene group is preferable and both ends of the (poly)thioalkylene group are preferably carbon atoms. In the present specification, "(poly)thioalkylene group" includes both of one thioalkylene (so-called thioalkylene) and a group having one or more kinds thioalkylene are multiply linked (so-called polythioalkylene).

The linear, branched or cyclic (poly)thioalkylene group is preferably $-C_pH_{2p}-(SC_pH_{2p})_q-$. In the formula, p is an integer of 1 to 5 independently for each $C_pH_{2p}$ unit. That is, each $C_lH_{2l}$ in the (poly)thioalkylene group may be the same or different in the (poly)thioalkylene group. For example, the (poly)thioalkylene group may be $-CH_2CH_2-(SCH_2)-(SCH_2CH_2)-$. p is preferably an integer from 2 to 4. q is preferably an integer from 1 to 4. (Poly)thioalkylene group does not contain a polysulfide bond.

Specific examples of the linear or branched (poly)thioalkylene group of R in the formula (I) are as follows:

- $CH_2$-$CH_2$-S-$CH_2$-$CH_2$-S-$CH_2$-$CH_2$-S-$CH_2$-$CH_2$-S-$CH_2$-$CH_2$-S-$CH_2$-$CH_2$-
- $CH_2$-$CH_2$-$CH_2$-S-$CH_2$-$CH_2$-S-$CH_2$-$CH_2$-S-$CH_2$-$CH_2$-$CH_2$-
- $CH_2$-$CH_2$-$CH_2$-S-$CH_2$-$CH_2$-S-$CH_2$-$CH_2$-$CH_2$-S-$CH_2$-$CH_2$-
- $CH(CH_3)$-$CH_2$-S-$CH_2$-$CH_2$-S-$CH_2$-$CH_2$-$CH_2$-S-$CH(CH_3)$-
- $CH(CH_2CH_3)$-$CH_2$-S-$CH_2$-$CH_2$-S-$CH_2$-$CH_2$-$CH_2$-S-$CH(CH_2CH_3)$-
- $CH_2$-$CH_2$-S-$CH_2$-$CH_2$-S-$CH_2$-$CH_2$-
- $CH_2$-$CH_2$-$CH_2$-S-$CH_2$-$CH_2$-
- $CH_2$-$CH_2$-S-$CH_2$-$CH_2$-$CH_2$-
- $CH_2$-$CH(CH_3)$-S-$CH_2$-$CH(CH_3)$-
- $CH(CH_3)$-$CH_2$-S-$CH(CH_3)$-$CH_2$-
- $CH_2$-$CH_2$-S-$CH_2$-$CH_2$-.

Examples of the optional substituent in the linear, branched or cyclic (poly)thioalkylene group of R in the formula (I) include an alkoxy group having 1 to 6 carbon atoms, a hydroxyl group, a carboxyl group, a halogen atom, an amino group, a mercapto group, a cyano group, a nitro group, an oxo group, a phenyl group and the like.

The sulfide compound (A) may be in the form of a high viscosic oil, semisolid or liquid, the viscosity of sulfide compound (A) may be 0.1 Pa·s to 1000 Pa·s, preferably 10 Pa·s to 1000 Pa·s, and more preferably 100 Pa·s to 300 Pa·s.

In the present invention, the method for producing the sulfide compound having a repeating units represented by formula (I) is not particularly limited. For example, the sulfide compound may be synthesized by reacting sulfur monochloride with chlorine gas to prepare an intermediate product, and then an mercapto group-containing compound, preferably an mercapto group-containing compound having two mercapto groups (for example, bis(2-mercaptoethyl)ether, and 1,5-pentanedithiol) in an inert solvent.

Examples of the inert solvent include a hydrocarbon type organic solvent such as hexane, benzene, toluene and xylene; an ether type organic solvent such as diethyl ether and tetrahydrofuran; a halogenated hydrocarbon type organic solvent such as dichloromethane, chloroform and monochlorobenzene , acetonitrile and the like.

The sulfide compound (A) functions as a vulcanizing agent (crosslinking agent) by mixing with the rubber component. Combining the sulfide compound (A) with following silica (B) when mixing the sulfide compound (A) with the rubber component, the performance of the sulfide compound (A) as a vulcanizing agent is improved.

[Silica]

Silica (B) in the present invention satisfies the following conditions that:

BET specific surface area is 0.1 to 200 $m^2/g$ and
DBP oil absorption is 50 to 300 ml/100g.

From the viewpoint of dispersibility in the rubber composition, mechanical property of the resulting rubber product and the like, BET specific surface area in silica (B) is 0.1 to 200 $m^2/g$. From the viewpoint of imparting better mechanical properties to the resulting rubber product, BET specific surface area in silica (B) is, for example, 0.1 to 170 $m^2/g$ preferably from 0.1 to 120 $m^2/g$, more preferably from 10 to 100 $m^2/g$, further preferably from 20 to 80 $m^2/g$, further more preferably from 25 to 60 $m^2/g$, particularly preferably 35 to 55 $m^2/g$.

The BET specific surface area of silica (B) in the present invention means the nitrogen adsorption amount specific surface area, and is measured, for example, according to JIS Z 8830:2013.

From the viewpoint of properties of the masterbatch, state of the masterbatch, dispersibility in the rubber composition to be obtained, the mechanical properties of the rubber product and the like, the DBP(Dibutyl phthalate) oil absorption of silica (B) is 50 to 300 ml/100g. From the viewpoint of imparting better mechanical properties to the resulting rubber product, the DBP(Dibutyl phthalate) oil absorption is, for example, from 75 to 275 ml/100g, preferably from 85 to 265 ml/100g, more preferably from 100 to 250 ml/100g, further preferably from 125 to 225 ml/100g, further more preferably from 150 to 200 ml/100g.

The DBP oil absorption of silica (B) in the present invention is measured according to JIS K6217-4:2008.

Silica (B) in the present invention satisfies the above conditions and specifically, for example, precipitation method silica, gel method silica, dry silica, colloidal silica, amorphous silica, crystalline silica, dry method silica, wet method silica, synthetic silica, natural silica and the like may be used.

A pH at 25°C of the aqueous dispersion of silica(B) of the present invention is preferably 5.0 to 8.0, more preferably 5.5 to 7.5, further preferably from 6.0 to 7.0. When the pH is more than 5.0, vulcanization time in producing

the rubber product can be shortened. When the pH is less than 8.0, the stability of the sulfide compound in the masterbatch is further improved.

The pH of the aqueous dispersion of silica (B) is a value obtained by measuring the aqueous dispersion at 25°C prepared by adding 4 g of silica to 100 mL of water and stirring for 5 minutes.

[Other Components in Masterbatch]

As other components comprised in the masterbatch, a resin component such as an acrylic polymer, a vulcanization agent (crosslinking agent) other than the above, a vulcanization accelerator, a vulcanization aid, a reinforcing agent, a filler, an antioxidant, a heat resistance improvement agent, a plasticizer, a viscosity modifier, a molecular weight regulator, a stabilizer and the like may be used as far as the effects of the present invention are not affected.

[Component Composition in a Masterbatch]

The mass ratio of the sulfide compound (A) and the silica (B) in the masterbatch of the present invention is appropriately selected depending on the kind of the sulfide compound (A) and the silica (B) used. The mass ratio of the sulfide compound (A) and the silica (B) ((A)/(B)) may be 20/80 to 80/20, preferably from 30/70 to 70/30. When the mass ratio of the sulfide compound (A) is more than 20, workability can be improved. When the mass ratio of the sulfide compound (A) is less than 80, handling properties of the masterbatch can be improved, for example, by reducing the odor.

In the masterbatch of the present invention, the sulfide compound(A) is preferably 20% by mass or more. In the masterbatch, silica (B) is preferably 20% by mass or more. In the masterbatch, the total amount of the sulfide compound (A) and the silica (B) is preferably 40% by mass or more, more preferably 55% by mass or more, further preferably 75% by mass or more.

[Method for Producing Masterbatch]

The method for producing the masterbatch in the present invention is not particularly limited as long as the method is capable of mixing the components of the masterbatch, but it is preferable to produce the masterbatch by mix the sulfide compound (A), silica (B) and an organic solvent, then, remove the organic solvent.

Hereinafter, said method for producing the masterbatch will be described. As the organic solvent, an organic solvent inert to the sulfide compound (A) and the silica (B) is used. Examples of the organic solvent include a hydrocarbon-type organic solvent such as hexane, pentane, benzene, toluene and xylene; ether-type organic solvents such as diethyl ether, tetrahydrofuran and dioxane, a halogenated hydrocarbon-type organic solvent such as dichloromethane, chloroform and monochlorobenzene, and a polar organic solvent such as methanol, ethanol, ethyl acetate, acetone, and acetonitrile. From the viewpoint of efficiency in removing the solvent, a solvent having a boiling point of 200°C or lower is preferable, and a solvent having a boiling point of 150°C or lower is more preferable. From the viewpoint of workability and solubility of sulfide compounds, a halogenated hydrocarbon-type organic solvent is preferable.

In addition to the sulfide compound (A) and the silica (B), other components may be added to the organic solvent and mixed, if necessary. The mixing may be carried out with a known mixer such as a homogenizer, a propeller stirrer, and a rotary stirrer.

A masterbatch may be obtained by removing the organic solvent from the thus-obtained mixture liquid. For example, the organic solvent may be removed from the mixture liquid by general methods such as reduced pressure drying (vacuum distillation), natural drying, heat drying, spray drying, and freeze drying. Reduced pressure drying is preferably used, thereby it is possible to obtain a masterbatch where the components are uniformly dispersed. The drying temperature may be 0°C to 200°C, and is preferably 40°C to 100°C. When the drying temperature is lower than 200°C, the sulfide compound is stable. When the drying temperature is higher than 0°C, drying is carried out efficiently.

The masterbatch in the present invention may be, for example, in the powdery form, pelletized form, and paste form. From the viewpoint of handling property, the masterbatch is preferably in the powdery form or pelletized form.

<Rubber Composition>

The rubber composition in the present invention comprise at least the masterbatch comprising the sulfide compound (A) and the silica (B), and a rubber component.

[Rubber Component]

As the rubber component, natural rubber(NR) and/or synthetic rubber(SR) are preferably used. The synthetic rubber is preferably diene-type synthetic rubber. Examples of the diene-type synthetic rubber include polyisoprene

synthetic rubber (IR), polybutadiene rubber (BR), styrene-butadiene copolymer rubber (SBR), acrylonitrile-butadiene copolymer rubber (NBR), chloroprene rubber (CR) and butyl rubber (IIR). These rubber components may be used alone or in combination of two or more.

[Other Additives in Rubber Composition]

The rubber composition in the present invention may contain other additives in addition to the masterbatch comprising the sulfide compound (A) and the silica (B) and the rubber component.

Other additives known in the technical field may be used and examples thereof include a vulcanization additive, a vulcanization accelerator, an antioxidant, a plasticizer, a viscosity modifier, a stabilizer, a processing aid, a vulcanization acceleration aid, a filler, and a coloring agent.

[Component Composition of Rubber Composition]

In the rubber composition, the masterbatch may be 0.5 to 60 parts by mass, preferably 0.5 to 40 parts by mass, preferably 0.5 to 30 parts by mass, and more preferably 0.5 to 20 parts by mass relative to 100 parts by mass of the rubber component.

In the rubber composition, the sulfide compound (A) in the masterbatch may be 0.1 to 30 parts by mass, for example 0.1 to 20 parts by mass, preferably 0.1 to 10 parts by mass relative to 100 parts by mass of the rubber component.

In the rubber composition, the silica (B) in the masterbatch may be 0.1 to 30 parts by mass, preferably from 0.1 to 20 parts by mass, more preferably 0.1 to 10 parts by mass relative to 100 parts by mass of the rubber component.

The other additives in the rubber composition may be, in total, 0.1 to 160 parts by mass, preferably 1 to 120 parts by mass, relative to 100 parts by mass of the rubber component.

[Method for Producing Rubber Composition]

The rubber composition in the present invention may be produced by mixing the masterbatch with natural rubber and/or synthetic rubber, and, as necessary, other additives by a known method. The rubber composition is preferably prepared by mixing in the range of 20 to 100°C, more preferably in the range of 20 to 80°C. By mixing the components in such a temperature range for 5 to 60 minutes, for example 10 to 30 minutes, the rubber composition is prepared without progress of a vulcanization reaction.

<Rubber Product>

A rubber product may be obtained by subjecting the rubber composition to a press treatment at a high temperature (for example, 120 to 200°C, preferably 130 to 170°C) for 5 to 30 minutes, for example, 10 to 20 minutes to progress the vulcanization reaction. This method may be referred to, for example, JIS K 6299:2012. The rubber product includes, for example, antivibration rubber; antivibration material such as an engine mount, a stabilizer bush, and suspension bush for automobile vehicle use; a vibration control damper for a general household electrical appliance such as a computer hard disks and a washing machine; building seismic walls in the building and housing fields; seismic control(vibration control) device or antivibration dumper such as seismic control(vibration control) dampers; and a general or industrial product such as an automobile part, a tire, a footwear, hose, a belt, an air springs and nonslip sheets. The rubber products using the rubber composition of the present invention can have good aging resistance, heat resistance and mechanical properties.

EXAMPLE

One embodiment of the present invention will be described more specifically by the following examples. "part" and "%" in the examples are based on mass unless otherwise indicated.

<Synthesis Example : Synthesis of poly(4-oxa-1,7,8-polythiaoctamethylene)>

80g of sulfur monochloride and 0.02 g of iron powder were added to a 100 mL four-necked flask, and the liquid temperature was brought to 20°C. Then, maintaining the liquid temperature at 20°C, 43 g of chlorine gas was blown in over 3 hours. Thereafter, 118 g of sulfur dichloride was obtained by removing the iron powder.

Next, 150 g of bis(2-mercaptoethyl)ether and 370 g of toluene were added to a 1000 mL four-necked flask, and then 112 g of the synthesized sulfur dichloride is added maintaining the liquid temperature at 20°C. The obtained reaction liquid was purified by vacuum distillation to obtain 182 g of poly (4-oxa-1,7,8-polythiaoctamethylene). The

chemical structure was confirmed by GPC and $^1$H-NMR.

The weight average molecular weight and the number average molecular weight of the sulfide compound (A) thus obtained was 20000 and 5000, respectively. For measuring the weight average molecular weight and number average molecular weight, Shodex KF804, KF803, KF802, and KF801(manufactured by Showa Denko KK) as coupled columns, GPC(LC-10A system, manufactured by Shimadzu Corporation), tetrahydrofuran as an eluent were used. The measurement was carried out at a 40°C in a column oven and was calculated based on standard polystyrene.

<Example 1 to 6 and Comparative Examples 1 to 3: Preparation and Evaluation of a Masterbatch>

[Preparation of a masterbatch (masterbatch formation)]

100 g of the sulfide compound obtained in the Synthesis Example, 300 g of monochlorobenzene and 100 g of silica having the properties shown in Table 1 were added to a 1000 mL four-necked flask and stirred at room temperature. Monochlorobenzene in the obtained mixture was removed by distillation under reduced pressure to obtain 200 g of the masterbatch. The mass ratio of sulfide compound/silica in each example and comparative example is shown in Table 2.

The case where the masterbatch was obtained in powdery form was judged as "○". The case where a good masterbatch cannot be obtained with maintaining dumpling state or in oily form was judged as "×".

[Stability of Sulfide Compound in a Masterbatch]

The stability of the sulfide compound (A) in the masterbatch obtained in each of Examples and Comparative Examples was evaluated. The evaluation was not carried out in Comparative Example 1 and 2 since the masterbatch could not be produced.

For the stability evaluation, the sulfide compound (A) was extracted from the masterbatch obtained in the each Examples and Comparative Examples, and the changes in the weight average molecular weight of the sulfide compound (A) before and after masterbatch formation were measured. For measurement of molecular weight, GPC (LC 10 A) manufactured by Shimadzu Corporation was used.

The extraction of the sulfide compound (A) after masterbatch formation was carried out by adding 100 g of dichloromethane to 5 g of the masterbatch, stirring at 25°C for 30 minutes, and removing the silica.

The stability evaluation shown in Table 2 was as follows:

Molecular weight change ratio(%)=[(weight average molecular weight of sulfide compound (A) before masterbatch formation)−(weight average molecular weight of sulfide compound (A) after masterbatch formation)]/(weight average molecular weight of sulfide compound (A) before masterbatch formation)×100

○(good): Molecular weight change ratio ≦ 10%
Δ(poor): 10% < Molecular weight change ratio ≦ 20%
×(bad): Molecular weight change ratio > 20%

<Example 7 to 10 and Comparative Examples 4 to 6: Preparation and Evaluation of Rubber Compositions>

[Preparation of Rubber Compositions]

Rubber compositions were prepared by mixing the each masterbatch obtained in Example 1,3,4 and 5 and Comparative Example 3 with an unvulcanized rubber composition respectively(Example 7 to 10 and Comparative Example 4, respectively). Specifically, the masterbatch and the unvulcanized rubber composition were kneaded in constant kneading time (15 minutes) with an open roll. Incidentally, the unvulcanized rubber composition means an A-kneaded rubber compound where compounding agents other than the vulcanization agent is kneaded beforehand. The kneading was carried out according to the method described in JIS K 6299-2001. A 6 inch mixing roll manufactured by Yasuda Seiki Seisakusho Ltd. was used as the open roll. Additionally, the rubber composition was also prepared without masterbatch formation by separately adding the sulfide compound and silica used in Example 1 and 3 at the same mass ratio ((A)/(B)=50/50) as Example 1(Comparative Example 5 and 6, respectively).

The each mixed amount is shown in Table 1.

[Table 1]

| | Mixed amount (phr) | Remarks |
|---|---|---|
| NR | 100 | - |
| Carbon black | 50 | Asahi Carbon Co., Ltd. HAF(N330)Asahi#70 |
| Zinc oxide | 5 | Seido Chemical Industry Co., Ltd. |
| Stearic acid | 1 | Asahi Denka Kogyo Co., Ltd. |
| Vulcanization promoter | 0.8 | Ouchi Shinko Chemical Industrial CO.,Ltd. Nocceler NS |
| Antiaging agent | 1 | Kawaguchi Chemical Industry Co., LTD. Antage LDA |
| Sulfide compound | 2 | Poly(4-oxa-1,7,8-polythiaoctamethylene) |
| Silica | (See Table2) | (See Table2) |

[Kneading Workability, Vulcanization Property of Rubber Compositions and Heat Resistance of Rubber]

Kneading workability in producing the rubber composition and vulcanization property of the rubber composition and heat resistance of rubber(vulcanized rubber) were evaluated.

The vulcanization property was evaluated by carrying out vulcanization test according to JIS K 6300-2-2001. A crosslinking curve was obtained with a curelastometer V type manufactured by Orientec Co., Ltd. as a vulcanization testing machine and then, a T90 value (optimum crosslinking time) was obtained from change in torque.

The heat resistance of the rubber was evaluated by measuring change in rubber hardness by a heat aging test. The heat aging test was carried out according to JIS K 6257-1993. Rubber hardness was measured according to JIS K 6253-1997. A rubber test piece is prepared according to JIS K 6299-2012.

The results are shown in Table 3. The evaluation criteria are as follows.

(Kneading Workability)

A state of the each rubber composition obtained by kneading the masterbatch and the unvulcanized rubber composition for 10 minutes was visually evaluated.

○(good) : Uniformly dispersed
Δ(poor): Nonuninform, the sulfide compound or silica is isolated on the rubber surface
×(bad) : The sulfide compound or silica is not kneaded in the rubber composition and adheres to the roll

(Vulcanization Time)

Difference in T90 value relative to the T90 value of the rubber sample using the masterbatch of Example 1 was evaluated.

○(good) : Difference in T90 ≦ 1 min
×(bad) : Difference in T90 > 1 min

(Heat Resistance)

Change in hardness of the rubber sample before and after a heat aging was measured. The heat aging test was carried out at 100°C for 72 hours.

○(good) : Change in hardness ≤ 5
×(bad) : Change in hardness > 5

The change in hardness was calculated by the following formula with reference to JIS K 6257-1993.

$$A_H = H_1 - H_0$$

$A_H$: Change in Hardness
$H_0$: Hardness before aging
$H_1$: Hardness after aging

[Table 2]

| <Masterbatch Formation and Stability of a Sulfide Compound in Masterbatch> | | | | | | |
|---|---|---|---|---|---|---|
| | Silica property | | Silica aqueous dispersion pH | Sulfide compound/ Silica mass ratio | Masterbatch formation | Stability of a sulfide compound in masterbatch |
| | BET specific surface area ($m^2/g$) | DBP oil absorption (ml/100g) | | | | |
| Ex. 1 | 50 | 180 | 6.8 | 50/50 | ○ | ○ |
| Ex. 2 | 113 | 215 | 8.3 | 50/50 | ○ | Δ |
| Ex. 3 | 130 | 240 | 5.8 | 50/50 | ○ | ○ |
| Ex. 4 | 160 | 240 | 5.0 | 50/50 | ○ | ○ |
| Ex. 5 | 200 | 245 | 5.9 | 50/50 | ○ | ○ |
| Ex. 6 | 120 | 220 | 11.0 | 50/50 | ○ | Δ |
| Com. Ex. 1 | 260 | 140 | 6.5 | 50/50 | × | - |
| Com. Ex. 2 | 260 | 155 | 6.5 | 50/50 | × | - |
| Com. Ex. 3 | 240 | 290 | 6.0 | 50/50 | ○ | ○ |

[Table 3]

| <Kneading Workability, Vulcanization Property of Rubber Compositions and Heat Resistance of Rubber> | | | | |
|---|---|---|---|---|
| | Production method of rubber compositions | Kneading workability | Vulcanization time (Difference in T90) | Heat resistance (Change in Hardness) |
| Ex. 7 | The Masterbatch obtained in Ex.1 was mixed. | ○ | - | ○ |
| Ex. 8 | The Masterbatch obtained in Ex.3 was mixed. | ○ | ○ | ○ |
| Ex. 9 | The Masterbatch obtained in Ex.4 was mixed. | ○ | ○ | ○ |
| Ex. 10 | The Masterbatch obtained in Ex.5 was mixed. | ○ | ○ | ○ |
| Com. Ex. 4 | The Masterbatch obtained in Com.Ex.3 was mixed. | ○ | × | × |
| Com. Ex. 5 | The Sulfide compound and the Silica in Ex. 1 were separately added at the same mass ratio. | × | × | × |
| Com. Ex. 6 | The Sulfide compound and the silica in Ex.3 were separately added at the same mass ratio. | × | × | × |

## Claims

**1.** A masterbatch comprising a sulfide compound (A) and silica (B),
wherein the sulfide compound (A) is a chain or cyclic compound consisting essentially of repeating units represented

by formula (I) :

[Chemical formula 1]

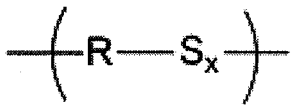 (I)

[In the formula (I), R represents a linear, branched or cyclic alkylene group having 1 to 12 carbon atoms; a linear, branched or cyclic (poly)oxyalkylene group having 1 to 12 carbon atoms; or a linear, branched or cyclic (poly)thioalkylene group having 1 to 12 carbon atoms (wherein the alkylene group, the (poly)oxyalkylene group and the (poly)thioalkylene group are unsubstituted or have 1 or more optional substituents), and x represents an integer from 1 to 8.]
wherein the number of the repeating units n is 1 to 400 and each of n repeating units is the same or different from each other and wherein the silica (B) satisfies following conditions that:

BET specific surface area is 0.1 to 200 $m^2/g$ and
DBP oil absorption is 50 to 300 ml/100g.

**2.** The masterbatch according to claim 1, wherein a pH at 25°C of an aqueous dispersion of the silica (B) is 5.0 to 8.0.

**3.** The masterbatch according to claim 1 or 2, wherein a mass ratio of the sulfide compound (A) and the silica (B) ((A)/(B)) is 20/80 to 80/20.

**4.** A method for producing a masterbatch comprising a sulfide compound (A) and silica (B),
wherein the sulfide compound (A) is a chain or cyclic compound consisting essentially of repeating units represented by formula (I) :

[Chemical formula 2]

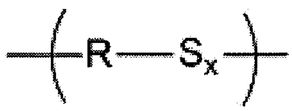 (I)

[In the formula (I), R represents a linear, branched or cyclic alkylene group having 1 to 12 carbon atoms; a linear, branched or cyclic (poly)oxyalkylene group having 1 to 12 carbon atoms; or a linear, branched or cyclic (poly)thioalkylene group having 1 to 12 carbon atoms (wherein the alkylene group, the (poly)oxyalkylene group and the (poly)thioalkylene group are unsubstituted or have 1 or more optional substituents), and x represents an integer from 1 to 8.] wherein the number of the repeating units n is 1 to 400 and each of n repeating units is the same or different from each other,

wherein the silica (B) satisfies following conditions that:

BET specific surface area is 0.1 to 200 $m^2/g$ and
DBP oil absorption is 50 to 300 ml/100g and

wherein the method for producing a masterbatch comprises mixing the sulfide compound (A), the silica (B) and an organic solvent and removing the organic solvent.

**5.** A rubber composition comprising the masterbatch according to any one of claims 1 to 3, and natural rubber and/or synthetic rubber.

**6.** A method for producing a rubber composition comprising the masterbatch according to any one of claims 1 to 3 and natural rubber and/or synthetic rubber,
wherein 0.5 to 60 parts by mass of the masterbatch is mixed with 100 parts by mass of the natural rubber and/or synthetic rubber.

## INTERNATIONAL SEARCH REPORT

International application No.
PCT/JP2017/037942

A. CLASSIFICATION OF SUBJECT MATTER
Int.Cl. C08J3/22(2006.01)i, C08K3/36(2006.01)i, C08K5/37(2006.01)i, C08L7/00(2006.01)i, C08L21/00(2006.01)i

According to International Patent Classification (IPC) or to both national classification and IPC

B. FIELDS SEARCHED

Minimum documentation searched (classification system followed by classification symbols)
Int.Cl. C08J3/00-3/28, C08J99/00, C08K3/00-13/08, C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model specifications of Japan | 1994-2018 |

Electronic data base consulted during the international search (name of data base and, where practicable, search terms used)
Japio-GPG/FX

C. DOCUMENTS CONSIDERED TO BE RELEVANT

| Category* | Citation of document, with indication, where appropriate, of the relevant passages | Relevant to claim No. |
|---|---|---|
| Y | JP 2016-3266 A (SUMITOMO RUBBER INDUSTRIES, LTD.) 01 January 2016, claim 1, paragraphs [0013], [0014], [0045], [0056], examples 1-6 (Family: none) | 1-2, 4-6 |
| X<br>Y | JP 2000-136269 A (YOKOHAMA RUBBER CO., LTD.) 16 May 2000, claims 1, 2, 10, paragraphs [0001], [0006], [0045], examples 1-8 (Family: none) | 1-3, 5-6<br>4 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 January 2018 (11.01.2018) | 23 January 2018 (23.01.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2017/037942

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-282946 A (TOYO TIRE AND RUBBER CO., LTD.) 19 October 2006, claims 1, 3, paragraph [0021] (Family: none) | 1-2, 4-6 |
| Y | JP 2006-213815 A (BRIDGESTONE CORP.) 17 August 2006, claims 1, 8, 9, paragraph [0006], example 1 & US 2009/0018238 A1, claims 1, 8, 9, paragraph [0001], example 1 & EP 1873191 A1 & CN 101115785 A & ES 2384181 T | 4 |
| A | WO 1997/35918 (BRIDGESTONE CORP.) 02 October 1997, page 32, lines 1-2 & US 6172157 B1, column 17 lines 8-11 & EP 846725 A2 & CN 1199412 A & KR 10-0357504 B | 1 |
| A | JP 2009-1719 A (SUMITOMO RUBBER INDUSTRIES, LTD.) 08 January 2009, claims 1, 4, paragraphs [0001], [0007], [0011]-[0061], examples 1-4 (Family: none) | 1-6 |
| A | JP 2014-210870 A (YOKOHAMA RUBBER CO., LTD.) 13 November 2014, claims 1, 4, paragraphs [0001], [0010]-[0029], examples 1-10 (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014210870 A